# EUROPÄISCHE PATENTSCHRIFT

(11) **EP 3 186 001 B1**
(45) Veröffentlichungstag und Bekanntmachung des Hinweises auf die Patenterteilung: **06.01.2021**
(21) Anmeldenummer: 15763195.3
(22) Anmeldetag: 28.08.2015
(51) Int. Cl.: B01J 20/26, B01J 20/32, B01J 20/34, C02F 1/28, C02F 101/20

(54) **SORBENS ZUR BINDUNG VON METALLEN, DESSEN HERSTELLUNG UND VERWENDUNG ZUR BINDUNG VON METALLEN**
SORBENS FOR BINDING METALS, PRODUCTION THEREOF AND USE THEREOF FOR THE BINDING OF METALS
AGENT DE SORPTION POUR LA LIAISON DE MÉTAUX, SA FABRICATION ET SON UTILISATION POUR LA CAPTURE DES MÉTAUX

(30) Priorität: 29.08.2014 DE 102014012566
(43) Veröffentlichungstag der Anmeldung: 05.07.2017
(73) Patentinhaber: instrAction GmbH, 69124 Heidelberg (DE)
(72) Erfinder: MEYER, Christian, 68723 Schwetzingen (DE); WELTER, Martin, 69151 Neckargemünd (DE); SCHWARZ, Thomas, 50676 Köln (DE)
(74) Vertreter: RatnerPrestia
(86) Internationale Anmeldenummer: PCT/EP2015/001754
(87) Internationale Veröffentlichungsnummer: WO 2016/030021

(56) Entgegenhaltungen:
- WO-A1-2011/012302
- US-A1- 2013 213 229
- US-A1- 2013 294 991
- CHANDA M ET AL: "POLYETHYLENEIMINE GEL-COAT ON SILICA. ÖHIGH URANIUM CAPACITY AND FAST KINETICS OF GEL-COATED RESIN", REACTIVE POLYMERS, ELSEVIER SCIENCE PUBLISHERS, AMSTERDAM, NL, Bd. 25, Nr. 1, Mai 1995 (1995-05), Seiten 25-36, XP000505033, ISSN: 0923-1137, DOI: 10.1016/0923-1137(95)00004-3

## Beschreibung

Die vorliegende Erfindung betrifft ein Sorbens, das geeignet ist, Metalle aus Lösungen zu binden, die Herstellung eines entsprechenden Sorbens sowie die Verwendung des Sorbens zur Bindung von Metallen aus Lösungen.

Die Entfernung bzw. Gewinnung oder Rückgewinnung von Metallen, insbesondere Schwermetallen, aus Industrieabwässern, zum Beispiel bei galvanischen Betrieben, aus Katalysatorrückständen aus der petro-chemischen oder pharmazeutischen Industrie, aus Grubenwasser beispielsweise aus Bergwerken, der Renaturierung von Schwermetallverseuchten Böden etc. ist eine zunehmend wichtige Aufgabe, da insbesondere Schwermetalle entweder eine auf die Umwelt schädigende Wirkung haben sowie auch deren Rückgewinnung ein wirtschaftliches Interesse darstellt. D.h., zum einen stehen Umwelt-Aspekte im Vordergrund, zum anderen ist auch die Bereitstellung von wertvollen Metallen, deren Verfügbarkeit zunehmend fraglich wird bzw. deren Preis steigt, von hohem Interesse. Ein weiteres wichtiges Anwendungsfeld von Sorbentien zur Entfernung bzw. Gewinnung oder Rückgewinnung von Metallen, bzw. Schwermetallen ist die Abtrennung derer in der Trinkwasseraufbereitung sowie in der Meerwasserentsalzung. Ebenso ist auch die Abtrennung von Schwermetallen aus konzentrierten Salz-Lösungen, wie sie in der Chlor-Alkali-Elektrolyse oder ähnlichen Verfahren eingesetzt werden, von hohem Interesse.

M Chanda et al., Reactive Polymers 1995, 25(1), Seiten 25-36 offenbart ein zur Bindung von Uran- und Eisen-Ionen aus Lösungen verwendetes Sorbens, umfassend ein mit einem Polyethylenimin beschichtetes poröses Silicagel als Trägermaterial. Das Polyethylenimin ist weiterhin mittels Glutaraldehyd vernetzt.

Bisher bekannte Phasen/Sorbentien haben für die genannten Anwendungsbereiche oft keine ausreichende Bindungskapazität, um die zu bindenden Metalle in ausreichendem Maße beispielsweise aus hochkonzentrierten bzw. niedrig-konzentrierten Lösungen oder stark sauren Lösungen zu binden, insbesondere auch in der Gegenwart von Alkali- oder Erdalkalimetallionen. Weiterhin weisen bisher bekannte Phasen oft keine Stabilität über den gesamten Bereich von pH 0 bis pH 14 auf. Ein weiterer Nachteil vieler bisher bekannter Phasen ist, dass das gewünschte Metall zwar gebunden werden kann, aber nicht auf einfache Art und Weise oder gar nicht von dem eingesetzten Sorbens wiedergewonnen werden kann. Durch die meist nicht zufriedenstellende Bindungskapazität bekannter Sorbentien/Phasen wird oft ein hohes Sorbens-/Phasen-Volumen erfordert, wodurch die Metall-Bindungsverfahren sehr aufwändig und kostenineffizient sind. Zudem ist durch die meist geringe Bindungskapazität bekannter Metall-Bindungs-Sorbentien ein mehrmaliges Durchführen des Verfahrens notwendig, um beispielsweise ein Schwermetall-freies Wasser als Trinkwasser bereitstellen zu können.

Es war deshalb die Aufgabe der vorliegenden Erfindung, ein neues Sorbens bereitzustellen, das die oben genannten Nachteile teilweise oder vollständig nicht aufweist. Insbesondere ist es eine Aufgabe der vorliegenden Erfindung, ein Sorbens mit einer hohen Bindungskapazität gegenüber Metallen, insbesondere Schwermetallen und Edelmetallen, pro Gramm bzw. pro Milliliter bereitzustellen. Vorzugsweise ist das erfindungsgemäß bereitgestellte Sorbens insbesondere mit Natriumhydroxid sanitisierbar, bzw. erlaubt die Wiedergewinnung der Metalle auf einfache Art und Weise. Eine weitere Aufgabe der vorliegenden Erfindung ist es, ein Sorbens bereitzustellen, das auch unter sauren Bedingungen noch eine relativ hohe Bindungskapazität gegenüber Metallen aufweist.

Weiterhin soll gegenüber aus dem Stand der Technik bekannten Metall-Bindungs-Sorbentien das Volumen des für die Metallbindung verwendeten Sorbens reduziert werden.

Die Aufgabe der vorliegenden Erfindung wird durch ein Sorbens gemäß Anspruch 1 gelöst.

In einer weiteren Ausführungsform der vorliegenden Erfindung ist es bevorzugt, dass die durch Titration bestimmte Konzentration der Amino-Gruppen des Sorbens mindestens 800 µmol/mL, stärker bevorzugt mindestens 1000 µmol/mL, noch stärker bevorzugt mindestens 1200 µmol/mL und am stärksten bevorzugt mindestens 1500 µmol/mL Sorbens aufweist. Die obere Grenze der durch Titration bestimmten Konzentration der Amino-Gruppen des erfindungsgemäßen Sorbens ist durch die räumliche Realisierbarkeit bzw. die maximal mögliche Dichte der Anordnung der Amino-Gruppen in dem Amino-Gruppen enthaltenen Polymer begrenzt und liegt bei maximal 4000 µmol/mL, stärker bevorzugt 3000 µmol/mL und am stärksten bevorzugt bei 2500 µmol/mL. Unter der durch Titration bestimmten Konzentration der Amino-Gruppen des Sorbens wird die Konzentration verstanden, die gemäß dem im Beispiels-Teil dieser Anmeldung angegebenen analytischen Methoden durch Durchbruchsmessung mit 4-Toluolsulphonsäure erhalten wird.

Weiterhin ist es bevorzugt, dass das erfindungsgemäße Sorbens ein Verhältnis der Masse des Amino-Gruppen enthaltenen Polymers zu dem Gesamtvolumen der Poren des porösen Trägermaterials von größer oder gleich 0,1 g/mL, stärker bevorzugt größer oder gleich 0,125 g/mL, noch stärker bevorzugt von größer oder gleich 0,15 g/mL und am stärksten bevorzugt größer oder gleich 0,20 g/mL aufweist. Auch hier sind der Obergrenze des genannten Verhältnisses physikalische Grenzen gesetzt, jedoch vorzugsweise bei maximal 0,5 g/mL, stärker bevorzugt bei maximal 0,4 g/mL und am stärksten bevorzugt bei maximal 0,3 g/mL.

Die Masse des Amino-Gruppen enthaltenen Polymers kann durch die Zunahme der Stampfdichte gegenüber dem Trägermaterial gemäß DIN 53194 bestimmt werden. Das Gesamtvolumen der Poren [V] des porösen Trägermaterials kann durch die Lösemittelaufnahmekapazität (WAK) des porösen Trägermaterials bestimmt werden. Ebenso kann auch das Porenvolumen [Vol.-%] bestimmt werden. Hierbei handelt es sich jeweils um das Volumen der frei zugänglichen Poren des Trägermaterials, da nur dieses durch die Lösemittelaufnahmekapazität bestimmt werden kann. Die Lösemittelaufnahmekapazität gibt an, welches Volumen eines Lösemittels erforderlich ist, um den Porenraum eines Gramms trockenes Sorbens (vorzugsweise stationäre Phase) vollständig zu füllen. Als Lösemittel können hier sowohl reines Wasser oder wässrige Medien als auch organische Lösemittel wie Dimethylformamid dienen. Falls das Sorbens beim Befeuchten sein Volumen vergrößert (Quellung), wird die dafür aufgewendete Lösemittelmenge automatisch erfasst. Zur Messung der WAK wird eine genau gewogene Menge trockenes Sorbens mit einem Überschuss gut benetzenden Lösemittel durchfeuchtet und überschüssiges Lösemittel aus dem Zwischenkornvolumen durch Zentrifugierung entfernt. Lösemittel innerhalb der Poren des Sorbens bleibt dabei erhalten. Die Masse des zurückgehaltenen Lösemittels wird durch Wägung ermittelt und über die Dichte ins Volumen umgerechnet. Die WAK eines Sorbens wird als Volumen pro Gramm trockenes Sorbens (mL/g) berichtet.

Die Beschichtung des Amino-Gruppen enthaltenden Polymers auf dem porösen Trägermaterial liegt vorzugsweise in der Form eines Hydrogels vor. Dies liegt insbesondere daran, dass das Amino-Gruppen enthaltende Polymer die oben genannte hohe Konzentration an Amino-Gruppen aufweist. Unter einem Hydrogel wird vorliegend ein ein Lösungsmittel (vorzugsweise Wasser) enthaltendes, aber Lösungsmittel-lösliches Polymer verstanden, dessen Moleküle chemisch, z. B. durch kovalente oder ionische Bindungen, oder physikalisch, z. B. durch Verschlaufen der Polymerketten, zu einem dreidimensionalen Netzwerk verknüpft sind. Durch eingebaute polare (vorzugsweise hydrophile) Polymerkomponenten quellen sie im Lösungsmittel (vorzugsweise Wasser) unter beträchtlicher Volumenzunahme, ohne aber ihren stofflichen Zusammenhalt zu verlieren. Von Hydrogelen aus dem Stand der Technik ist bekannt, dass sie teilweise ihre Eigenschaften irreversibel verlieren, wenn sie getrocknet werden. In der vorliegenden Anmeldung verlieren die Hydrogele jedoch ihre Eigenschaften nicht, da sie durch das poröse Trägermaterial chemisch und mechanisch stabilisiert sind. Die Amino-Gruppen enthaltende Beschichtung liegt insbesondere dann als Hydrogel in dem erfindungsgemäßen Sorbens vor, wenn dieses in einem Lösungsmittel gequollen vorliegt, d.h. insbesondere während der weiter unten beschriebenen Verwendung zur Bindung von Metallen aus Lösungen.

Das poröse Trägermaterial ist vorzugsweise ein mesoporöses oder makroporöses Trägermaterial. Die mittlere Porengröße des porösen Trägermaterials liegt vorzugsweise im Bereich von 6 nm bis 400 nm, stärker bevorzugt im Bereich von 10 bis 300 nm und am stärksten bevorzugt im Bereich von 20 bis 150 nm vor. Eine Porengröße in dem angegebenen Bereich ist wichtig, um sicherzustellen, dass die Bindungskapazität ausreichend hoch ist. Für den Fall einer zu geringen Porengröße kann das Amino-Gruppen enthaltene Polymer auf der Oberfläche des porösen Trägermaterials die Poren verstopfen und das innere Volumen der Poren wird nicht mit Amino-Gruppen enthaltendem Polymer gefüllt. Weiterhin ist es bevorzugt, dass das poröse Trägermaterial ein Porenvolumen im Bereich von 30 bis 90 Vol.-%, stärker bevorzugt von 40 bis 80 Vol.-% und am stärksten bevorzugt von 60 bis 70 Vol.-% aufweist, jeweils bezogen auf das Gesamtvolumen des porösen Trägermaterials.

Die mittlere Porengröße des porösen Trägermaterials kann durch das Porenfüllverfahren mit Quecksilber gemäß DIN 66133 bestimmt werden.

Das poröse Trägermaterial kann ein organisches Polymer, ein anorganisches Material oder ein Kompositmaterial aus organischen Polymeren und anorganischen Materialien umfassen bzw. daraus bestehen.

Um ein Sorbens bereitzustellen können, das über einen Bereich von pH 0 bis pH 14 eine hohe Sorbensstabilität aufweist, ist es bevorzugt, wenn das poröse Trägermaterial ein organisches Polymer ist.

Vorzugsweise wird das organische Polymer für das poröse Trägermaterial aus der Gruppe ausgewählt, die aus Polyalkyl, vorzugsweise mit einer aromatischen Einheit in der Seitenkette (das heißt gebunden an die Polyalkylkette), Polyacrylat, Polymethacrylat, Polyacrylamid, Polyvinylalkohol, Polysaccharide (z.B. Stärke, Zellulose, Zellulosester, Amylose, Agarose, Sepharose, Manan, Xamtan und Dextran), sowie Mischungen davon besteht. Am stärksten bevorzugt ist das organische Polymer Polystyrol oder ein Derivat von Polystyrol, das vorzugsweise ein Copolymer aus Polystyrol (oder Derivat von Polystyrol) und Divinylbenzol ist. Trägt das organische Polymer eine aromatische Einheit, so liegt diese vorzugsweise sulphoniert vor. In einer ganz besonders bevorzugten Ausführungsform der vorliegenden Erfindung ist das organische Polymer ein sulphoniertes vernetztes Poly(Styrol-Co-Divinylbenzol) oder ein Derivat davon.

Ist das poröse Trägermaterial ein anorganisches Material, bzw. umfasst es ein anorganischen Material, ist das anorganische Material vorzugsweise ein anorganisches Mineraloxid, ausgewählt aus der Gruppe, die aus Siliziumoxid, Aluminiumoxid, Magnesiumoxid, Titanoxid, Zirkoniumoxid, Fluorosil, Magnetit, Zeolithen, Silikaten (z.B. Kieselgur), Mica, Hydroxyapatit, Fluoroapatit, Metall-organischen Grundstrukturen, Keramiken, Glas, porösem Glas (z.B. Trisoperl), Metallen, z.B. Aluminium, Silizium, Eisen, Titan, Kupfer, Silber und Gold, Graphit und amorphen Kohlenstoff besteht. Insbesondere bevorzugt ist das anorganische poröse Trägermaterial ein Siliziumdioxid oder Aluminiumoxid, insbesondere Siliziumdioxid. Das Siliziumdioxid ist vorzugsweise Kieselgel.

Insbesondere aus Gründen des Einsatzes in einem weiten pH-Bereich, insbesondere im basischen Bereich, ist das poröse Trägermaterial vorzugsweise ein organisches Polymer.

Das erfindungsgemäß eingesetzte poröse Trägermaterial kann homogener oder heterogener Zusammensetzung sein, und bezieht deshalb insbesondere Materialien ein, die aus einem oder mehreren der oben genannten Materialien zusammengesetzt sind, beispielsweise in mehrschichtigen Zusammensetzungen.

Das poröse Trägermaterial ist vorzugsweise ein partikuläres Material mit einer durchschnittlichen Partikelgröße im Bereich von 5 bis 2000 µm, stärker bevorzugt im Bereich von 10 bis 1000 µm. Das poröse Trägermaterial kann auch ein blatt- oder faserförmiges Material sein, wie beispielsweise eine Membran oder ein Schaum. Die äußere Oberfläche des porösen Trägermaterials kann somit flach (Blättchen, Filme, Scheiben, Membranen, Fasergewebe oder nichtfaseriges Gewebe) oder gebogen sein (entweder konkav oder konvex: kugelförmig, Körnchen, (Hohl-)Fasern, Röhren, Kapillaren).

Wie weiter oben erwähnt, ist das poröse Trägermaterial mit einem Amino-Gruppen enthaltenden Polymer beschichtet, das aus einzelnen Polymerketten besteht bzw. diese umfasst. Die Polymerketten sind vorzugsweise kovalent untereinander verknüpft. Das Amino-Gruppen enthaltende Polymer ist vorzugsweise nicht kovalent mit der Oberfläche des porösen Trägermaterials verknüpft.

Die Verwendung eines nicht-kovalent oberflächengebundenen vernetzten Polymers als Amino-Gruppen enthaltendes Polymer auf dem porösen Trägermaterial weist zudem die folgenden drei Vorteile auf: (1) Flexibilität des Polymers, dadurch dass es nicht kovalent an die Oberfläche des porösen Trägermaterials gebunden ist; (2) die Vernetzung des Amino-Gruppen enthaltenden Polymers stellt sicher, dass der Film auf der Oberfläche des porösen Trägermaterials bleibt und nicht während der Verwendung des Sorbens verloren geht; (3) die Dicke des Amino-Gruppen enthaltenden Polymers kann auf dem Trägermaterial entsprechend groß gewählt werden, wenn das Polymer nicht kovalent zu dem Trägermaterial gebunden ist.

Eine ausreichende Flexibilität und Permeabilität des Amino-Gruppen enthaltenden Polymers ist wichtig, damit mehrere der Amino-Gruppen in eine Konformation kommen können, die es ermöglicht, die Metalle mehrfach koordinativ zu binden.

Die hohe Metall-Bindungs-Kapazität der erfindungsgemäßen Sorbentien bzw. der nach untenstehenden erfindungsgemäßen Verfahren hergestellten Sorbentien war aus folgenden Gründen für die Erfinder überraschend:
- Trotz dem nahezu vollständigen Befüllen der Poren des Trägermaterials mit dem Amino-Gruppen enthaltenden Polymer, sind die Poren durch die Permeabilität des Polymers für die Metalle zugänglich, wodurch das erfindungsgemäße Sorbens eine hohe Metall-Bindungs-Kapazität aufweist. Dies war umso verwunderlicher, als Polymerstandards aus der inversen Größenausschluss-Chromatographie keine Zugänglichkeit bzw. Permeabilität zeigen. Dies war auch für kleinste Standards mit 450 Da zu über 90% zu beobachten.
- Im Gegensatz zu üblichen chromatographischen Sorbentien und Metall-Bindungs-Sorbentien, die auf dem Prinzip der Oberflächenfunktionalisierung beruhen, wurde überraschenderweise durch die hohe Metallbindungs-Eigenschaft festgestellt, dass die vorliegende Erfindung das gesamte Volumen des für die Bindung verantwortlichen Polymers und nicht nur die Oberfläche dessen ausnutzt, d.h. das Amino-Gruppen enthaltende Polymer bildet zusammen mit dem die Metalle enthaltenden Lösungsmittel ein sogenanntes Hydrogel, in dem das Polymernetzwerk eine Nanoporosität aufweist. Dies führt dazu, dass die Metall-Bindungs-Kapazität nicht nur von der Oberfläche des Trägermaterials, sondern vom Volumen des aufgebrachten Polymers bestimmt wird.
- Die hohe Metall-Bindungs-Kapazität der erfindungsgemäßen Sorbentien bzw. erfindungsgemäß hergestellten Sorbentien ist bedingt durch die Ausbildung von chemischen Komplexen zwischen Gruppen des Amino-Gruppen enthaltenden Polymers und den zu bindenden Metallen. Diese Gruppen können die Amino-Gruppen selbst sein, oder es können Reste sein, die Lewis-Base-Eigenschaften aufweisen, die an das Amino-Gruppen enthaltende Polymer gebunden sind (wie weiter unten beschrieben). Dies führt bspw. zu dem Vorteil der hohen Salztoleranz bzw. Bindungs-Kapazität im sauren Milieu gegenüber klassischen Ionenaustauschern.
- Parallel zur Ausbildung von chemischen Komplexen über die die Metalle gebunden werden, hat die Phase auch noch eine sehr hohe Bindekapazität für Anionen z. B. Sulfat, Phosphat, Nitrit, Nitrat, Chromat, Arsenat etc.

Das Amino-Gruppen enthaltende Polymer auf dem erfindungsgemäßen 10 Sorbens ist ausgewählt aus Polyvinylamin, Polyallylamine und Polylysin. Unter diesen sind Polyvinylamin und Polyallylamin bevorzugt, wobei Polyvinylamin insbesondere bevorzugt ist.

Gemäß einer bevorzugten Ausführungsform des erfindungsgemäßen Sorbens weist das Amino-Gruppen enthaltende Polymer einen Vernetzungsgrad von wenigstens 2 % auf, bezogen auf die Gesamtanzahl der vernetzbaren Gruppen in dem Amino-Gruppen enthaltenden Polymer. Stärker bevorzugt liegt der Vernetzungsgrad im Bereich von 2,5 bis 60 %, stärker bevorzugt im Bereich von 5 bis 50 % und am stärksten bevorzugt im Bereich von 10 bis 40 %, jeweils bezogen auf die Gesamtanzahl der vernetzbaren Gruppen in dem Amino-Gruppen enthaltenden Polymer. Der Vernetzungsgrad kann durch die entsprechend gewünschte Menge an Vernetzungsmittel eingestellt werden. Dabei wird angenommen, dass 100 Mol-% des Vernetzungsmittels reagiert und Vernetzungen bildet. Dies kann durch analytische Verfahren wie durch MAS-NMR Spektroskopie und quantitative Bestimmung der Menge des Vernetzungsmittels in Bezug auf die Menge des eingesetzten Polymers verifiziert werden. Dieses Verfahren ist erfindungsgemäß zu bevorzugen. Der Vernetzungsgrad kann jedoch auch durch IR-Spektroskopie bezogen auf beispielsweise C-O-C oder OH-Schwingungen unter Verwendung einer Kalibrierungskurve bestimmt werden. Beide Verfahren sind analytische Standardverfahren für einen Fachmann in diesem Gebiet. Wenn der Vernetzungsgrad oberhalb der angegebenen Obergrenze liegt, ist die Polymerbeschichtung des Amino-Gruppen enthaltenden Polymers nicht flexibel genug und resultiert in einer geringeren Metall-Bindungs-Kapazität. Ist der Vernetzungsgrad unterhalb der angegebenen Untergrenze ist die Polymerbeschichtung nicht ausreichend stabil auf der Oberfläche des porösen Trägermaterials.

Das Vernetzungsmittel weist zwei, drei oder mehr funktionelle Gruppen auf, durch deren Bindung an das Polymer die Vernetzung erfolgt. Das Vernetzungsmittel, das zur Vernetzung des Amino-Gruppen enthaltenden Polymers verwendet wird, wird vorzugsweise aus der Gruppe ausgewählt, die aus Dicarbonsäuren, Tricarbonsäuren, Harnstoff, Bis-Epoxiden oder Tris-Epoxiden, Diisocyanaten oder Triisocyanaten, und Dihalogenalkylen oder Trihalogenalkylen besteht, wobei Dicarbonsäuren und Bis-Epoxiden bevorzugt sind, wie beispielsweise Terephthalsäure, Biphenyldicarbonsäure, Ethylenglycoldiglycidylether und 1,12-bis-(5-norbonen-2,3-dicarboximido)-decandicarbonsäure, wobei Ethylenglycoldiglycidylether und 1,12-bis-(5-norbonen-2,3-dicarboximido)-decandicarbonsäure stärker bevorzugt sind. Das Vernetzungsmittel ist in einer Ausführungsform der vorliegenden Erfindung vorzugsweise ein lineares, konformationsflexibles Molekül mit einer Länge zwischen 4 und 20 Atomen.

Das bevorzugte Molekulargewicht des Amino-Gruppen enthaltenden Polymers des erfindungsgemäßen Sorbens liegt vorzugsweise im Bereich von 5000 bis 50000 g/mol, was insbesondere für das verwendete Polyvinylamin gilt.

Das erfindungsgemäße Sorbens kann in einer weiteren Ausführungsform auch organische Reste aufweisen, die an das Amino-Gruppen enthaltende Polymer gebunden sind und die Eigenschaft einer Lewis-Base aufweisen. Hierbei ist insbesondere bevorzugt, dass der organische Rest an eine Amino-Gruppe des Amino-Gruppen enthaltenden Polymers gebunden ist. Dabei ist insbesondere bevorzugt, dass die Amino-Gruppe, an die der organische Rest gebunden ist, nach der Bindung eine sekundäre Amino-Gruppe darstellt, damit auch diese noch ausreichend Lewis-Basizität aufweist, ohne dabei sterisch gehindert zu sein.

In einer weiteren Ausführungsform betrifft die vorliegende Erfindung auch ein Verfahren zur Herstellung des Sorbens gemäß Anspruch 7.

In dem erfindungsgemäßen Verfahren zur Herstellung eines Sorbens ist das in Schritt (a) bereitgestellte poröse Trägermaterial eines wie weiter oben in Verbindung mit dem erfindungsgemäßen Sorbens genannt. Die dort genannten bevorzugten Ausführungsformen gelten hier im gleichen Maße.

In Schritt (b) des erfindungsgemäßen Verfahrens wird vorzugsweise ein unvernetztes Amino-Gruppen enthaltendes Polymer verwendet, wie es oben in Verbindung mit dem Amino-Gruppen enthaltenden Polymer des erfindungsgemäßen Sorbens aufgeführt wird. Die dort genannten bevorzugten Ausführungsformen gelten hier im gleichen Maße.

Die Porenfüllmethode in Schritt (b) des Aufbringens des Amino-Gruppen enthaltenden Polymers auf das poröse Trägermaterial im erfindungsgemäßen Verfahren bringt gegenüber herkömmlichen Tränkungs-Verfahren den Vorteil mit sich, dass insgesamt eine größere Menge an Amino-Gruppen enthaltendem Polymer auf das poröse Trägermaterial aufgebracht werden kann, wodurch die Bindungs-Kapazität für Metalle erhöht wird. Dies führt zu den oben angegebenen überraschenden Vorteilen.

Unter der Porenfüllmethode versteht man allgemein ein spezielles Beschichtungsverfahren, bei dem eine Lösung, die das Amino-Gruppen enthaltende Polymer, in der Menge auf das poröse Trägermaterial aufgebracht wird, die dem Gesamtvolumen der Poren des porösen Trägermaterials entspricht. Dabei wird das Gesamtvolumen der Poren des porösen Trägermaterials im Schritt (b), d.h. dem ersten Aufbringen, vorab wie oben angegeben ermittelt.

In Schritt (c) des erfindungsgemäßen Verfahrens wird das für die Porenfüllmethode verwendete Lösungsmittel vorzugsweise durch Trocknung des Materials bei Temperaturen im Bereich von 40°C bis 90°C, stärker bevorzugt im Bereich von 50°C bis 70°C und am stärksten bevorzugt im Bereich von 50°C bis 60°C entfernt. Hierbei wird insbesondere bei einem Druck im Bereich von 0,01 bis 1 bar getrocknet, stärker bevorzugt bei einem Druck im Bereich von 0,1 bis 0,5 bar.

Es ist ein wesentlicher Schritt des erfindungsgemäßen Verfahrens zur Herstellung eines Sorbens, dass in einem Schritt (d) nach dem Trocknen bzw. Entfernen des Lösungsmittels aus dem ersten Schritt des Aufbringens durch Porenfüllmethode die Schritte (b) und (c) des Aufbringens eines Amino-Gruppen enthaltenden Polymers auf das poröse Trägermaterial durch Porenfüllmethode wiederholt wird. Hierfür wird das Gesamtvolumen der Poren durch Differenzwägung des feuchten und des trockenen Materials nach Schritt (b) ermittelt, das für das wiederholte Aufbringen des Amino-Gruppen enthaltenden Polymers auf das poröse Trägermaterial zur Verfügung steht. In einer weiteren Ausführungsform des erfindungsgemäßen Verfahrens ist es zudem bevorzugt, dass die Schritte (b) und (c) mindestens zweimal wiederholt werden. Auch vor der zweiten Wiederholung der Schitte (b) und (c) wird das für die Porenfüllmethode zur Verfügung stehende Gesamtvolumen der Poren durch Differenzwägung des feuchten und des trockenen Materials bestimmt. Die Wiederholung der Schritte (b) und (c) erfolgt vorzugsweise in der angegebenen Reihenfolge.

Nach den Schritten des Aufbringens des Amino-Gruppen enthaltenden Polymers erfolgt in einem Schritt (e) das Vernetzen des Amino-Gruppen enthaltenden Polymers, vorzugsweise durch die in Verbindung mit dem erfindungsgemäßen Sorbens angegebenen Vernetzungsmittel. Alle oben in Verbindung mit dem erfindungsgemäßen Sorbens angegebenen Merkmale in Bezug auf die Vernetzung treffen auch auf das erfindungsgemäße Verfahren zur Herstellung zu.

Weiterhin bevorzugt ist, dass zwischen den mehrmaligen Schritten des Aufbringens eines Amino-Gruppen enthaltenden Polymers auf das poröse Trägermaterial durch Porenfüllmethode kein Vernetzen des Amino-Gruppen enthaltenden Polymers erfolgt.

Vorzugsweise erfolgt das jeweilige Entfernen des bei der Porenfüllmethode verwendeten Lösungsmittels durch Trocknen in einem Pflugschartrockner, da dadurch dieser Schritt deutlich beschleunigt werden kann.

In einer weiteren Ausführungsform werden in dem erfindungsgemäßen Verfahren die Schritte (b) und (c) vor dem Schritt (e) so oft wiederholt, dass die nach Schritt (e) durch Titration bestimmte Konzentration der Amino-Gruppen des Sorbens mindestens 600 µmol/mL ist, stärker bevorzugt mindestens 800 µmol/mL, noch stärker bevorzugt mindestens 1000 µmol/mL und am stärksten bevorzugt mindestens 1200 µmol/mL ist, jeweils bezogen auf das Gesamtvolumen des Sorbens. Die oben in Verbindung mit dem erfindungsgemäßen Sorbens angegebenen Obergrenzen der Konzentration der Amino-Gruppen des Sorbens sind auch die im erfindungsgemäßen Verfahren bevorzugten Obergrenzen.

In einer weiteren Ausführungsform des erfindungsgemäßen Verfahrens ist es bevorzugt, dass das Verhältnis der Masse des Amino-Gruppen enthaltenden Polymers zu dem Gesamtvolumen der Poren des porösen Trägermaterials nach Schritt (d) größer oder gleich 0,1 g/mL, stärker bevorzugt größer oder gleich 0,125 g/mL, und am stärksten bevorzugt größer oder gleich 0,15 g/ml ist. Die Obergrenze dieses Verhältnisses liegt vorzugsweise bei maximal 0,5 g/mL, stärker bevorzugt bei maximal 0,4 g/mL und am stärksten bevorzugt bei maximal 0,3 g/mL.

Bei der Porenfüllmethode in Schritt (b) des erfindungsgemäßen Verfahrens wird als Lösungsmittel für das Amino-Gruppen enthaltende Polymer vorzugsweise eines eingesetzt, in dem das Amino-Gruppen enthaltende Polymer löslich ist. Die Konzentration des Amino-Gruppen enthaltenden Polymers in dem für die Porenfüllmethode verwendeten Lösungsmittel in Schritt (b) des erfindungsgemäßen Verfahrens liegt vorzugsweise im Bereich von 5 g/L bis 200 g/L, stärker bevorzugt im Bereich von 10 g/L bis 180 g/L, am stärksten bevorzugt im Bereich von 30 bis 160 g/L. Eine Konzentration unterhalb der angegebenen Untergrenze hat den Nachteil, dass die Schritte (b) und (c) zu oft durchgeführt werden müssten, um die gewünschte durch Titration bestimmte Konzentration der Amino-Gruppen des Sorbens zu erreichen, die eine ausreichende Bindungs-Kapazität für Metalle gewährleistet. Eine Konzentration oberhalb der angegebenen Obergrenze stellt nicht sicher, dass das Polymer in ausreichendem Maße in die Poren des porösen Trägermaterials eindringen kann.

In einer weiteren Ausführungsform des erfindungsgemäßen Verfahrens ist es bevorzugt, dass in einem Schritt (f) - vorzugsweise nach dem Schritt (e) - ein organischer Rest an das Amino-Gruppen enthaltende Polymer gebunden wird, der die Eigenschaft einer Lewis-Base aufweist. Dabei ist es insbesondere bevorzugt, dass der organische Rest an die Amino-Gruppen des Amino-Gruppen enthaltenden Polymers gebunden wird. Weiterhin bevorzugt ist hier, dass nach der Bindung des organischen Restes die Amino-Gruppen als sekundäre Amino-Gruppen vorliegen, damit deren Lewis-Basizität nicht verloren geht und keine sterische Hinderung zur Bindung der Amino-Gruppen an die Metalle auftritt. Unter einem organischen Rest, der die Eigenschaft einer Lewis-Base aufweist, versteht man insbesondere Reste, die eine Komplexbindung mit dem zu bindenden Metall eingehen.

Organische Reste, die eine Lewis-Base aufweisen, sind beispielsweise solche, die Heteroatome mit freien Elektronenpaaren, wie N, O, P, As oder S aufweisen.

Alle oben in Verbindung mit dem erfindungsgemäßen Sorbens genannten bevorzugten Ausführungsformen gelten in gleichem Maße für das nach dem erfindungsgemäßen Verfahren hergestellten Sorbens, bzw. für die in dem erfindungsgemäßen Verfahren verwendeten Bestandteile.

Eine weitere Ausführungsform der vorliegenden Erfindung betrifft die Verwendung eines Sorbens zur Bindung von Metallen aus Lösungen gemäß Anspruch 12.

Bei den Lösungen, aus denen Metalle gebunden werden sollen, kann es sich erfindungsgemäß um konzentrierte oder verdünnte wässrige oder nicht-wässrige, saure, basische oder neutrale Lösungen handeln.

Bei den Metallen der vorliegenden Anmeldung, handelt es sich vorzugsweise um Metalle, die in ionischer Form bzw. auch als Metall-Ligand-Koordinationsverbindungen in ionischer Form in den genannten Lösungen vorliegen. Die Metalle sind vorzugsweise komplexbildende Metalle, d.h. Metalle, die eine Metall-Ligand Koordinationsbindung eingehen können. Stärker bevorzugt sind die Metalle Übergangsmetalle bzw. Metalle der seltenen Erden, noch stärker bevorzugt Edelmetalle bzw. seltene Erden. Ganz besonders bevorzugt sind die Metalle Kupfer, Nickel und Chrom.

In einer weiteren Ausführungsform der erfindungsgemäßen Verwendung sind die Lösungen, aus denen die Metalle gebunden werden sollen, Lösungen, die einen Salzgehalt an Alkaliionen von mindestens 5 g/l aufweisen.

Weiterhin sind die Lösungen, aus denen die Metalle gebunden werden sollen, vorzugsweise wässrige Lösungen, insbesondere auch eine saure wässrige Lösung, mit einem pH-Wert von ≤ 5, stärker bevorzugt ≤ 4 und noch stärker bevorzugt ≤ 3.

Zur Bindung der Metalle aus Lösungen, werden die metallhaltigen Lösungen mit dem erfindungsgemäßen Sorbens in Kontakt gebracht. Dies kann beispielsweise in einer klassischen Säule geschehen. Dabei können auch erfindungsgemäße Sorbentien miteinander gemischt vorliegen, die für die Bindung unterschiedlicher Metalle entwickelt worden sind. Dies erfolgt in der Regel durch das Anbinden unterschiedlicher organischer Reste an das Amino-Gruppen enthaltende Polymer.

Analog kann das In-Kontakt-Bringen des erfindungsgemäßen Sorbens mit der metallhaltigen Lösung auch im Batch-Modus durchgeführt werden, d.h. ohne einen Durchlauf der Lösung durch ein Gefäß mit dem Sorbens, sondern in Form einer Aufschwämmung des Sorbens in der Lösung.

Die vorliegende Erfindung soll nun anhand der folgenden Figuren und Beispiele erläutert werden, die jedoch nur als exemplarisch anzusehen sind:

### Abbildungen der Figuren:

Figuren 1 und 2: Fig. 1 und 2 zeigen den Vergleich der Isothermen der Sorbentien aus Beispiel 1 und Vergleichsbeispiel 1 bei der Bindung von Kupfer aus wässrigen Lösungen gemäß Beispiel 2.
Figur 3: Fig. 3 zeigt die Metall-Bindungskapazität des Sorbens aus Beispiel 1 für die Metalle Kupfer, Nickel und Chrom in Abhängigkeit von der Metallkonzentration gemäß Beispiel 3.
Figur 4: Fig. 4 zeigt die Menge an absorbiertem Kupfer [g] pro Menge an Sorbens [kg] in der Gegenwart von unterschiedlichen Konzentrationen an NaCl gemäß Beispiel 4.
Figuren 5 und 6: Fig. 5 und 6 zeigen den zeitlichen Verlauf aus Beispiel 5 für die Aufnahme von Kupfer eines Sorbens aus Beispiel 1.
Figur 7: Fig. 7 zeigt die Bindekapazität für Kupfer nach Wiederherstellung des Sorbens nach diversen Cyclen gemäß Beispiel 6.
Figur 8: Fig. 8 zeigt den Vergleich der Kupfer-Bindung von mehrfach beschichteteten Sorbentien mit einem einfach beschichteten Sorbens gemäß Beispiel 7.

### Beispielsteil:

### Analytische Verfahren:

Bestimmung der Konzentration der Amino-Gruppen eines Sorbens mit Durchbruchsmessung mit 4-Toluolsulphonsäure (Titrationsanalyse):
Die dynamische Anionenaustauschkapazität wird mit einer Säule der zu prüfenden stationären Phase bestimmt. Hierzu werden zunächst alle austauschbaren Anionen in der Säule gegen Trifluoracetat ausgetauscht. Dann wird die Säule mit einer wässrigen Reagenzlösung von Toluol-4-sulfonsäure durchspült, bis diese Lösung in gleicher Konzentration am Ende der Säule wieder austritt (Durchbruch). Aus der Konzentration der Toluol-4-sulfonsäurelösung, deren Flussrate und der Fläche des Durchbruchs im Chromatogramm wird die von der Säule gebundene Menge Toluol-4-sulfonsäure berechnet. Die so ermittelte Menge an Toluol-4-sulfonsäure gibt die Konzentration der Amino-Gruppen des Sorbens an.

Die dynamische Anionenaustauschkapazität für Toluol-4-sulfonsäure in Wasser wird auf das Phasenvolumen bezogen und in mmol pro Liter (mM/L) berichtet.

### Beispiel 1: Herstellung eines erfindungsgemäßen Sorbens:

200 g eines sulfonierten Polystyrol/Divinylbenzol Trägermaterials (mittlere Porengröße 30 nm) werden in ein Gefäß eingewogen. Dieses Material besitzt ein Porenvolumen bestimmt aus der WAK von 1,48 mL/g. In der ersten Beschichtung soll das Porenvolumen zu 95% gefüllt werden. Die Polymerlösung zur Beschichtung wird vorbereitet. 165,3 g einer Polyvinylaminlösung (Feststoffgehalt 12,1 Gew.-%) werden mit 108 g Wasser verdünnt. Der pH-Wert der Lösung wird mit 7 ml konz. Salzsäure auf 9,5 eingestellt. Die Polymerlösung wird zum Träger gegeben und für 3 h am Überkopfschüttler gemischt. Anschließend wird der beschichtete Träger für 48 h bei 50°C im Vakkumtrockenschrank bei 25 mBar getrocknet. Das Material hat 197,7 g Wasser durch die Trocknung verloren. Das Material wird zum zweiten Mal beschichtet. Dazu werden 165,0 g Polyvinylaminlösung (Feststoffgehalt 12,1 Gew.-%) mit 6,8 mL konz. HCl auf einen pH-Wert von 9,5 eingestellt und mit 20 g Wasser verdünnt. Die Polymerlösung wird zum Träger gegeben und für 3 h am Überkopfschüttler gemischt. Anschließend wird der beschichtete Träger für 48 h bei 50°C im Vakkumtrockenschrank bei 25 mBar getrocknet. Das Material hat 181,2 g Wasser durch die Trocknung verloren. Das Material wird zum dritten Mal beschichtet. Dazu werden 165,2 g Polyvinylaminlösung (Feststoffgehalt 12,1%) mit 7,1 mL konz. HCl auf einen pH-Wert von 9,5 eingestellt und mit 5 g Wasser verdünnt. Die Polymerlösung wird zum Träger gegeben und für 3 h am Überkopfschüttler gemischt. Anschließend wird die Phase im Vakuumtrockenschrank bei 50°C und 25 mBar zur Gewichtskonstanz getrocknet.

Das Material wurde in 3 Schritten mit insgesamt 0,20 g PVA pro mL Porenvolumen beschichtet.

Das getrocknente Material wurde in 1,5 L Isopropanol in einem Doppelmantelreaktor suspendiert und mit 24,26 g Ethylendiglycoldigylcidylether bei 55°C innerhalb von 6 h vernetzt.

Das beschichtete Material wird mit folgenden Lösungsmitteln gewaschen: 600 mL Isopropanol, 3600 mL 0,1 M HCl, 1800 mL Wasser, 1800 mL 1 M NaOH , 1800 mL Wasser, 1800 mL Methanol.

Anschließend wird das Material getrocknet. Ausbeute 275 g getrocknetes Material.

Analytik: Die durch Titration bestimmte Konzentration der Amino-Gruppen beträgt 963 µmol/mL.

### Vergleichsbeispiel 1: Herstellung eines konventionellen Sorbens:

Bei dem konventionellen Sorbens handelt es sich um ein mit 2-Aminoethylsulfidethyl modifiziertes Silica-Gel ((Si)-CH₂-CH₂-S-CH₂-CH₂-NH₂) mit einer Partikelgröße von > 45 µm (Hersteller Phosphonics, Lieferant Sigma-Aldrich, Bestellnummer: 743453-10G; 0.8-1.3 mmol/g loading).

Die Modifikation kann durch Umsetzung von Silica-Gel mit 3-Mercapto-propyl-trimethoxysilan und anschließender Umsetzung mit Ethylimin erfolgen.

### Beispiel 2: Verwendung der nach Beispiel 1 und Vergleichsbeispiel 1 hergestellten Sorbentien zur Bindung von Kupfer aus wässrigen Lösungen:

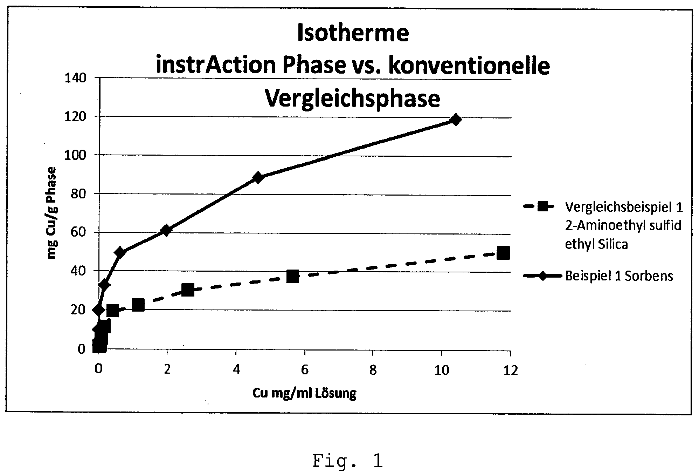

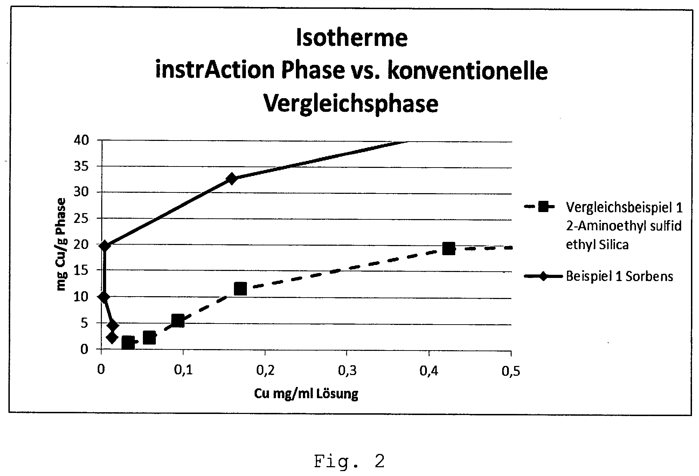

Zur Aufnahme von Isothermen in den Figuren 1 und 2 wurde Folgendes durchgeführt:
10 Proben von je ca. 100 mg des Sorbens werden genau eingewogen und jeweils mit verschiedenen wässrigen Cu-II-Lösungen (als CuSO₄) unterschiedlicher Konzentration für mindestens 1,5 h inkubiert. Das Sorbens wird abfiltriert und die Cu-II-Konzentration in Lösung photometrisch bestimmt. Aus der verbleibenden Konzentration an Kupfer wird die gebundene Menge Kupfer berechnet und die Isotherme erstellt.

Aus dem Vergleich der Isothermen in den Figuren 1 und 2 ist ersichtlich, dass das erfindungsgemäße Sorbens eine wesentlich höhere Bindungskapazität aufweist als das konventionelle Sorbens. Aus den angenäherten Rechteckisothermen für das erfindungsgemäße Sorbens ist ersichtlich, dass dieses eine sehr starke Bindung ohne eigentliche Gleichgewichtseinstellung zeigt. Dies erlaubt auch die nahezu vollständige Entfernung von Schwermetallen aus stark verdünnten Lösungen.

### Beispiel 3: Verwendung des nach Beispiel 1 hergestellten Sorbens zur Bindung der drei Übergangsmetalle Nickel, Kupfer und Chrom aus einer Lösung:

Jeweils 10 Proben einer definierten Menge des Sorbens werden genau eingewogen und jeweils mit verschiedenen wässrigen Metall-Lösungen unterschiedlicher Konzentration für mindestens 1,5 h inkubiert. Das Sorbens wird abfiltriert und die Metall-Konzentration in Lösung photometrisch bzw. mit einer Metallbestimmungsmethode nach Hach-Lange (vorzugsweise photometrisch) bestimmt. Aus der verbleibenden Konzentration an Metall wird die gebundene Menge Metall berechnet und die Isotherme erstellt.

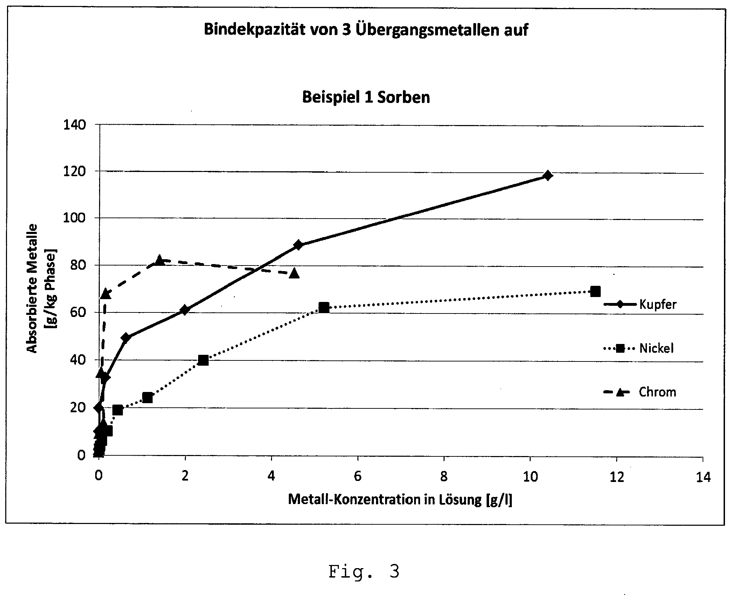

Aus Figur 3 ist ersichtlich, dass das erfindungsgemäße Sorbens die Metalle Nickel (∼70 mg/g Sorbens), Kupfer (∼120 mg/g Sorbens) und Chrom (∼80 mg/g Sorbens) in hohem Maße bindet. Gleiches konnte auch für Lösungen mit den Metallen Palladium, Blei und Iridium gezeigt werden.

### Beispiel 4: Verwendung des nach Beispiel 1 hergestellten Sorbens zur Bindung von Metallen aus Lösungen mit einem hohen Salzgehalt:

5 Proben a ca. 100 mg des Sorbens werden genau eingewogen und mit je einer Lösung von Cu (als CuSO4*5H2O = 50 mg/ml Wasser) für mindestens 0,5 h inkubiert, die 0 M NaCl, 0,01 M NaCl, 0,1 M NaCl, 0,5 M NaCl und 1 M NaCl enthalten. Anschließend wird das Sorbens abfiltriert und die Kupferkonzentration im Filtrat photometrisch bestimmt. Aus der verbleibenden Konzentration an Metall wird die gebundene Menge Kupfer berechnet und die Isotherme erstellt.

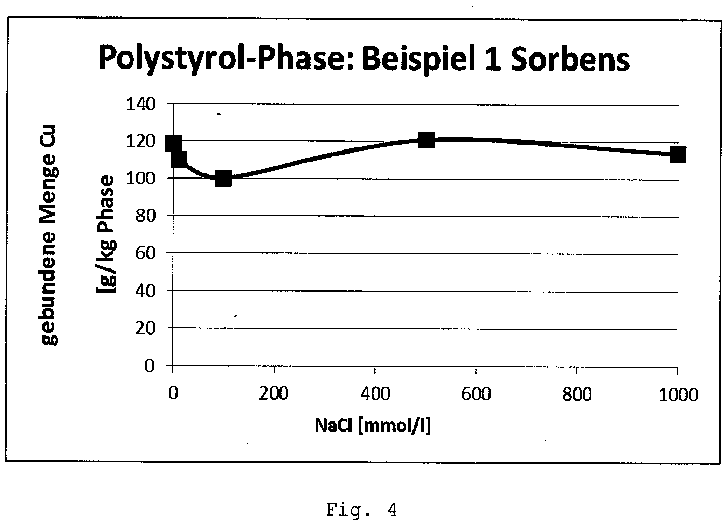

Wie aus Figur 4 gesehen werden kann, liegt selbst bei Konzentrationen von bis zu 1 M Kochsalz die Bindungskapazität von Kupfer bei >100 mg Cu/g Sorbens. Dies zeigt, dass es sich um einen nicht-ionischen Bindungsmechanismus handelt, der sich damit von "handelsüblichen" Ionenaustauschern deutlich unterscheidet.

Es gibt keinen Wettbewerb um Bindungsplätze von Kupfer mit Natrium, das nicht komplexiert wird. Die Bindekapazität für Kupfer bleibt daher erhalten.

Diese Eigenschaft erlaubt den Einsatz der Phase in der Behandlung von Trink-, Oberflächen-, Gruben-, Abwässern, Meerwasserentsalzungsanlagen, Chlorkalielektrolyse etc. bei der ubiquitär auftretende und in hohem Überschuss vorhandene Alkali- und Erdalkali-Metalle nicht stören dürfen.

### Beispiel 5: Bindungsgeschwindigkeit eines nach Beispiel 1 hergestellten Sorbens:

Es werden Proben mit je ca. 100 mg der Phase genau eingewogen und mit einer Cu-Lösung (als CuSO4*5H2O = 50 mg/ml Wasser) für den angegebenen Zeitraum inkubiert. Anschließend wird das Sorbens abfiltriert und die Kupferkonzentration im Filtrat photometrisch bestimmt. Aus der verbleibenden Konzentration an Metall wird die gebundene Menge Kupfer berechnet.

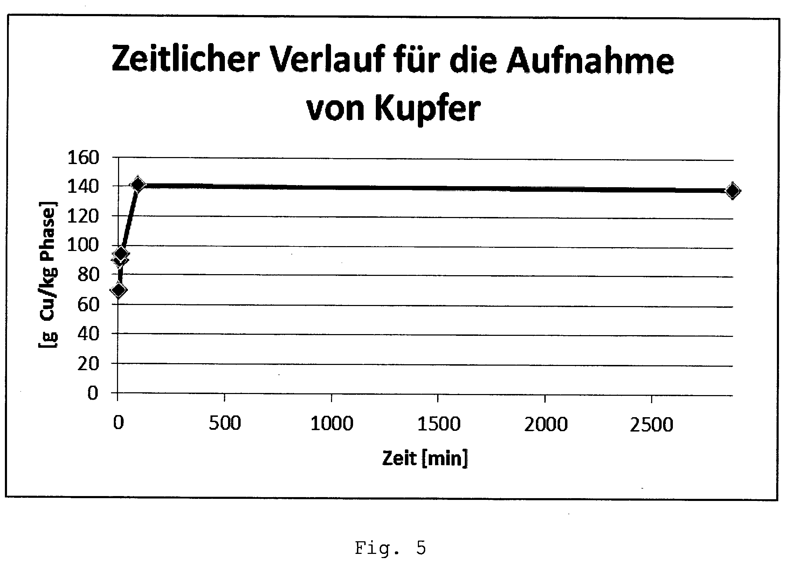

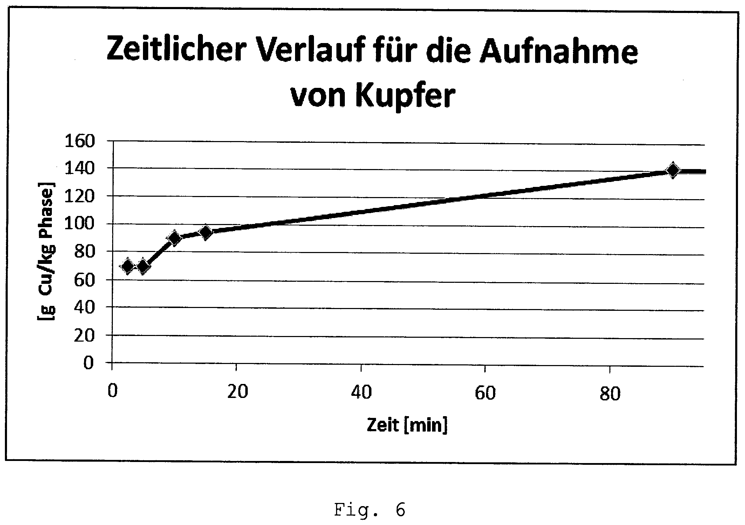

Die Figuren 5 und 6 zeigen die Bindung von Kupfer aus Lösungen gegen die Zeit. Nach etwa 90 Minuten sind alle Bindungsplätze des Sorbens mit Kupfer besetzt. Eine Änderung der Konzentration ist auch nach 48 Stunden nicht zu beobachten.

### Beispiel 6: Wiederverwendbarkeit des nach Beispiel 1 hergestellten Sorbens:

1 g des Sorbens aus Beispiel 1 wird abgewogen und wie folgt behandelt:
1. Spülen mit 1 M NaOH (3 x 5 ml)
2.Wasser (3 x 5 ml gespült).
3. Zugabe von 50 ml Cu (als CuSO₄*5H₂O, 50 mg/ml)
4. Inkubation für 90 min
5. Filtration
6. Bestimmung der Kupferkonzentration im Filtrat (photometrisch) und Berechnung der Menge gebundenen Kupfers
7.Wiederholung des Prozederes

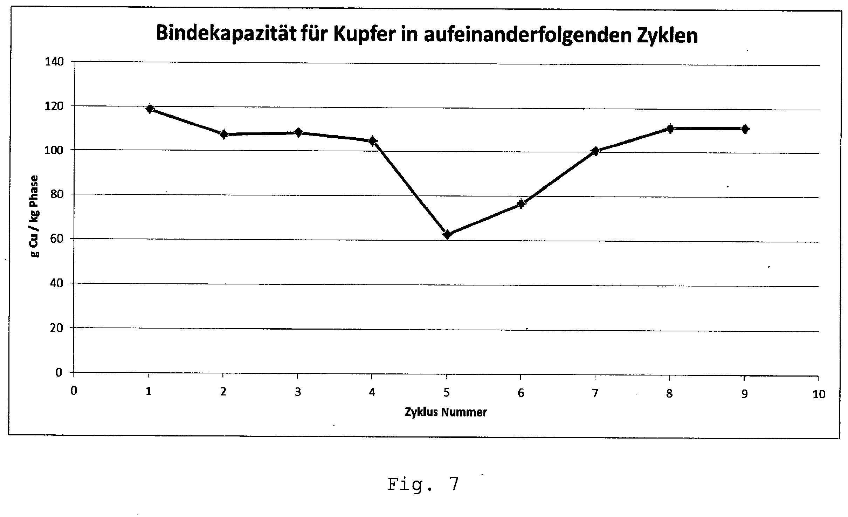

Wie aus Figur 7 ersichtlich bleibt die Bindungskapazität von Kupfer nach 10 Zyklen der Wiederherstellung und Widerverwendung des Sorbens nach 10 Zyklen (mit Ausnahme der Cyclen 5 und 6) selbst bei Behandlung mit 5 M HCL und 1 M NaOH unbeeinträchtigt.

### Beispiel 7: Vergleich von mehrfach beschichteteten Sorbentien mit einem einfach beschichteten Sorbens:

### Herstellung eines einfach beschichteten Sorbens auf einem Silicaträger:

100 g Kieselgel AGC D-50-120A (mittlere Porengröße 12 nm) werden in ein Gefäß eingewogen. Dieses Material besitzt ein Porenvolumen bestimmt aus der WAK von 1,12 mL/g. Die Polymerlösung zur Beschichtung wird vorbereitet. 79,6 g einer Polyvinylaminlösung (Feststoffgehalt 11,3 Gew.-%) werden mit 20 g Wasser verdünnt. Der pH-Wert der Lösung wird mit 3 ml konz. Salzsäure auf 9,5 eingestellt. Die Polymerlösung wird zum Träger gegeben und für 6 h auf eine Siebmaschine gemischt. Anschließend wird der beschichtete Träger für 48 h bei 50°C im Vakkumtrockenschrank bei 25 mbar getrocknet.

Das Material wurde mit 0,08 g PVA pro mL Porenvolumen beschichtet.

Das getrocknete Material wurde in 0,5 L Isopropanol in einem Doppelmantelreaktor suspendiert und mit 3,64 g Ethylendiglycoldigylcidylether bei 55°C innerhalb von 6 h vernetzt.

Das beschichtete Material wird mit folgenden Lösungsmitteln gewaschen: 400 mL Isopropanol, 1200 mL 0,1 M HCl, 400 mL Wasser, 800 mL, 0,5 M Triethylamin in Wasser , 600 mL Wasser, 600 mL Methanol.

Anschließend wird das Material getrocknet. Ausbeute 108,0 g getrocknetes Material.

Analytik: Die durch Titration bestimmte Konzentration der Amino-Gruppen beträgt 593 µmol/mL.

### Herstellung eines zweifach beschichteten Sorbens auf einem Silicaträger:

250 g Kieselgel AGC D-50-120A (mittlere Porengröße 12 nm) werden in ein Gefäß eingewogen. Dieses Material besitzt ein Porenvolumen bestimmt aus der WAK von 1,12 mL/g. Die Polymerlösung zur Beschichtung wird vorbereitet. 200 g einer Polyvinylaminlösung (Feststoffgehalt 11,3 Gew.-%) werden mit 60 g Wasser verdünnt. Der pH-Wert der Lösung wird mit 7,5 ml konz. Salzsäure auf 9,5 eingestellt. Die Polymerlösung wird zum Träger gegeben und für 6 h auf der Siebmaschine durch Vibration gemischt. Anschließend wird der beschichtete Träger für 48 h bei 50°C im Vakuumtrockenschrank bei 25 mbar getrocknet. Das Material hat 230 g Wasser durch die Trocknung verloren. Das Material wird zum zweiten Mal beschichtet. Dazu werden 200 g Polyvinylaminlösung (Feststoffgehalt 11,3 Gew.-%) mit 6,8 mL konz. HCl auf einen pH-Wert von 9,5 eingestellt und mit 23 g Wasser verdünnt. Die Polymerlösung wird zum Träger gegeben und wieder für 6 h auf der Siebmaschine durch Vibration gemischt. Anschließend wird der beschichtete Träger für 48 h bei 50°C im Vakkumtrockenschrank bei 25 mbar getrocknet.

Das Material wurde mit 0,16 g PVA pro mL Porenvolumen beschichtet.

Das getrocknete Material wurde in 1,5 L Isopropanol in einem Doppelmantelreaktor suspendiert und mit 18,2 g Ethylendiglycoldigylcidylether bei 55°C innerhalb von 6 h vernetzt.

Das beschichtete Material wird mit folgenden Lösungsmitteln gewaschen: 1000 mL Isopropanol, 3000 mL 0,1 M HCl, 1000 mL Wasser, 2000 mL, 0,5 M Triethylamin in Wasser, 1500 mL Wasser, 1500 mL Methanol.

Anschließend wird das Material getrocknet. Ausbeute 308 g getrocknetes Material.

Analytik: Die durch Titration bestimmte Konzentration der Amino-Gruppen beträgt 1254 µmol/mL.

### Herstellung eines dreifach beschichteten Sorbens auf einem Silicaträger:

250 g Kieselgel AGC D-50-120A (mittlere Porengröße 12 nm) werden in ein Gefäß eingewogen. Dieses Material besitzt ein Porenvolumen bestimmt aus der WAK von 1,12 mL/g. Die Polymerlösung zur Beschichtung wird vorbereitet. 199 g einer Polyvinylaminlösung (Feststoffgehalt 11,3 Gew.-%) werden mit 60 g Wasser verdünnt. Der pH -Wert der Lösung wird mit 7,6 ml konz. Salzsäure auf 9,5 eingestellt. Die Polymerlösung wird zum Träger gegeben und für 6 h auf der Siebmaschine durch Vibration gemischt. Anschließend wird der beschichtete Träger für 48 h bei 50°C im Vakuumtrockenschrank bei 25 mbar getrocknet. Das Material hat 231 g Wasser durch die Trocknung verloren. Das Material wird zum zweiten Mal beschichtet. Dazu werden 200 g Polyvinylaminlösung (Feststoffgehalt 11,3 Gew.-%) mit 7,0 mL konz. HCl auf einen pH-Wert von 9,5 eingestellt und mit 24 g Wasser verdünnt. Die Polymerlösung wird zum Träger gegeben und wieder für 6 h auf der Siebmaschine durch Vibration gemischt. Anschließend wird der beschichtete Träger für 48 h bei 50°C im Vakuumtrockenschrank bei 25 mbar getrocknet. Das Material hat 210 g Wasser durch die Trocknung verloren. Das Material wird zum dritten Mal beschichtet. Dazu werden 199 g Polyvinylaminlösung (Feststoffgehalt 11,3 Gew.-%) mit 7,0 mL konz. HCl auf einen pH-Wert von 9,5 eingestellt und mit 4 g Wasser verdünnt. Die Polymerlösung wird zum Träger gegeben und wieder für 6 h auf der Siebmaschine durch Vibration gemischt. Anschließend wird der beschichtete Träger für 48 h bei 50°C im Vakuumtrockenschrank bei 25 mbar getrocknet.

Das Material wurde mit 0,24 g PVA pro mL Porenvolumen beschichtet.

Das getrocknete Material wurde in 1,5 L Isopropanol in einem Doppelmantelreaktor suspendiert und mit 27,3 g Ethylendiglycoldigylcidylether bei 55°C innerhalb von 6 h vernetzt.

Das beschichtete Material wird mit folgenden Lösungsmitteln gewaschen: 1000 mL Isopropanol, 3000 mL 0,1 M HCl, 1000 mL Wasser, 2000 mL, 0,5 M Triethylamin in Wasser, 1500 mL Wasser, 1500 mL Methanol.

Anschließend wird das Material getrocknet. Ausbeute 330 g getrocknetes Material.

Analytik: Die durch Titration bestimmte Konzentration der Amino-Gruppen beträgt 1818 µmol/mL.

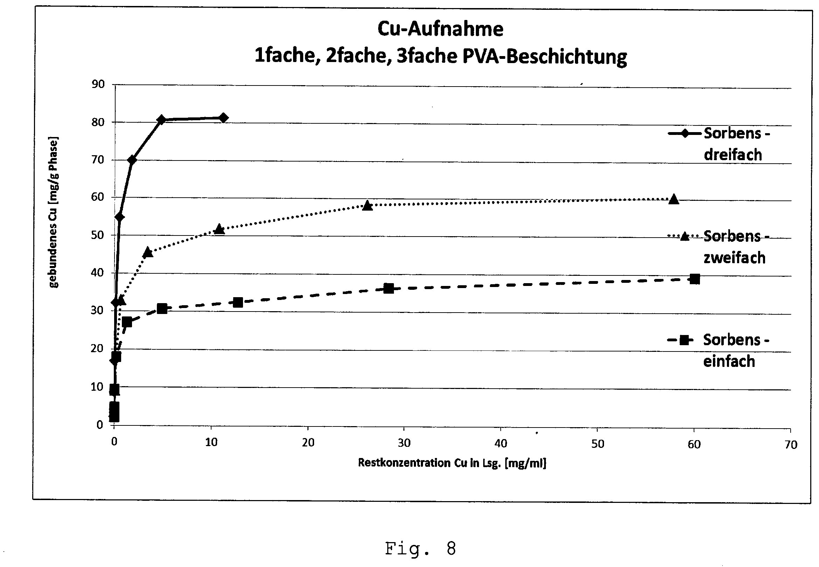

Figur 8 zeigt eindeutig, dass die Bindungskapazität bei dem zweifach und dem dreifach beschichteten Sorbens gegenüber dem einfach beschichteten Sorbens drastisch zunimmt.

### Vergleichsbeispiel 2: Herstellung eines Sorbens gemäß dem Beispiel 2 der DE 10 2011 107 197 A1:

Als Basis für das Sorbens wird Amberchrom CG1000S von Rohm & Haas verwendet. Dieses wird folgendermaßen sulfoniert: Dazu werden 165 mL konz. H₂SO₄ in einen temperierbaren 250 mL Reaktor gegeben. Zu der Schwefelsäure werden 30,0 g des Trägermateriales gegeben und das Einwaagefläschchen drei Mal mit je 20 mL konz. Schwefelsäure nachgespült. Nach der Zugabe des Trägermaterials wird die Suspension gerührt und auf 80°C temperiert. Nach 3 h Reaktionszeit wird die Suspension aus den Reaktor abgelassen und auf zwei 150 mL Spritzen verteilt. Die Schwefelsäure wird abgesaugt und die Phase nacheinander mit 200 mL verdünnter (62%iger) Schwefelsäure, 125 mL Wasser, 175 mL Methanol, 125 mL Wasser und abschließend mit 175 mL Methanol gespült. Die Phase wird trockengesaugt und anschließend bei 50°C im Vakuum getrocknet. Von dem resultierenden sulfonierten Polystyrol wird die Wasseraufnahmekapazität, bzw. das Porenvolumen bestimmt, indem das getrocknete, sulfonierte Polystyrol gewogen, mit dem gleichen Volumen Wasser versetzt wird und anschließend überschüssiges Wasser abzentrifugiert wird. Das in den Poren befindliche Wasser bleibt dabei an seinem Ort.

Zum Beschichten des Polystyrols wird eine wässrige Polyvinylaminlösung bereitet, die aus Polyvinylamin mit einem mittleren Molgewicht von 35000 g/mol besteht. Der pH-Wert wird auf 9,5 eingestellt. Die Menge des Polyvinylamins beträgt hierbei 15% des zu beschichtenden Polystyrols, und das Volumen der Lösung beträgt 95% des ermittelten Porenvolumens des Polystyrols. Die Polyvinylaminlösung wird zusammen mit dem Polystyrol in eine fest verschlossene PE-Flasche gegeben und für 6 Stunden auf einem Siebrüttler bei hoher Frequenz geschüttelt. Dabei muss auf eine ausreichende Durchmischung geachtet werden. Nach der Prozedur hat sich die Polyvinylaminlösung in die Poren des Polystyrols gearbeitet. Das Polystyrol wird anschließend bei 50°C im Vakuumtrockenschrank zur Gewichtskonstanz getrocknet.

Zur Vernetzung des Polyvinylamins wird das beschichtete Polystyrol im dreifachen Volumen Isopropanol aufgenommen und mit 5% Diethylenglycoldiglycidylether, bezogen auf die Aminogruppenzahl des Polyvinylamins, versetzt. Das Reaktionsgemisch wird für sechs Stunden im Reaktor bei 55°C gerührt. Anschließend wird es auf eine Glasfilternutsche überführt und mit 2 Bettvolumina Isopropanol, 3 Bettvolumina 0,5 M TFA-Lösung, 2 Bettvolumina Wasser, 4 Bettvolumina 1 M Natronlauge und abschließend 8 Bettvolumina Wasser gespült.

Analytik: Die durch Titration bestimmte Konzentration der Amino-Gruppen beträgt 265 µmol/mL.

## Patentansprüche

1. Sorbens, umfassend ein mit einem vernetzten Amino-Gruppen enthaltenden Polymer beschichtetes poröses Trägermaterial, worin die durch Titration bestimmte Konzentration der Aminogruppen des Sorbens mindestens 600 µmol/mL ist, bezogen auf das Gesamtvolumen des Sorbens und wobei das Amino-Gruppen enthaltende Polymer ausgewählt ist aus Polyvinylamin, Polyallylamin und Polylysin, wobei die Konzentration der Amino-Gruppen des Sorbens mittels Durchbruchsmessung mit 4-Toluolsulphonsäure wie im Abschnitt "Analytische Verfahren" der Beschreibung beschrieben bestimmt wird.

2. Sorbens nach Anspruch 1, worin das Verhältnis der Masse des Amino-Gruppen enthaltenden Polymers zu dem Gesamtvolumen der Poren des porösen Trägermaterials größer oder gleich 0,1 g/mL ist, wobei die Masse des Amino-Gruppen enthaltenden Polymers durch die Zunahme der Stampfdichte gegenüber dem Trägermaterial gemäß DIN 53194 bestimmt wird, und wobei das Gesamtvolumen der Poren des porösen Trägermaterials durch die Lösemittelaufnahmekapazität des porösen Trägermaterials bestimmt, wobei die Lösemittelaufnahmekapazität, berichtet in der Einheit g (organisches Lösungsmittel)/ mL (trockenes Sorbens), gemessen wird, indem eine genau gewogene Menge trockenes Sorbens mit einem organischen Lösungsmittel wie zum Beispiel Dimethylformamid durchfeuchtet und überschüssiges Lösemittel aus dem Zwischenkornvolumen durch Zentrifugierung entfernt wird, die Masse des zurückgehaltenen Lösemittels durch Wägung ermittelt wird und über die Dichte des organischen Lösungsmittels ins Volumen umgerechnet wird.

3. Sorbens nach Anspruch 1 oder 2, worin das Porenvolumen des porösen Trägermaterials im Bereich von 30 bis 90 Vol.-% liegt, bezogen auf das Gesamtvolumen des porösen Trägermaterials, wobei das Porenvolumen in der selben Weise wie das Gesamtvolumen der Poren des porösen Trägermaterials im Anspruch 2 bestimmt wird.

4. Sorbens nach einem der Ansprüche 1 bis 3, worin das poröse Trägermaterial eine mittlere Porengröße im Bereich von 6 nm bis 400 nm aufweist, wobei die mittlere Porengröße des porösen Trägermaterials durch das Porenfüllverfahren mit Quecksilber gemäß DIN 66133 bestimmt wird.

5. Sorbens nach einem der Ansprüche 1 bis 4, worin das poröse Trägermaterial ein organisches Polymer, ein anorganisches Material oder ein Kompositmaterial aus organischem Polymer und anorganischen Material umfasst.

6. Sorbens nach einem der Ansprüche 1 bis 5, worin das Amino-Gruppen enthaltende Polymer nicht kovalent verknüpft mit dem porösen Trägermaterial vorliegt.

7. Verfahren zur Herstellung eines Sorbens nach einem der Ansprüche 1 bis 6, das die folgenden Schritte umfasst:
(a) Bereitstellen eines porösen Trägermaterials;
(b) Aufbringen eines Amino-Gruppen enthaltenden Polymers auf das poröse Trägermaterial durch Porenfüllmethode, wobei das Amino-Gruppen enthaltende Polymer ausgewählt ist aus Polyvinylamin, Polyallylamin und Polylysin;
(c) Entfernen des bei der Porenfüllmethode verwendeten Lösungsmittels;
(d) Wiederholen der Schritte (b) und (c); und
(e) Vernetzen des Amino-Gruppen enthaltenden Polymers,
worin die Schritte (b) und (c) vor dem Schritt (e) so oft wiederholt werden, dass die nach Schritt (e) durch Titration bestimmte Konzentration der Aminogruppen des Sorbens mindestens 600 µmol/mL ist, bezogen auf das Gesamtvolumen des Sorbens, wobei die Konzentration der Amino-Gruppen des Sorbens mittels Durchbruchsmessung mit 4-Toluolsulphonsäure wie im Abschnitt "Analytische Verfahren" der Beschreibung beschrieben bestimmt wird.

8. Verfahren nach Anspruch 7, worin das Verhältnis der Masse des Amino-Gruppen enthaltenden Polymers zu dem Gesamtvolumen der Poren des porösen Trägermaterials nach Schritt (d) größer oder gleich 0,1 g/mL ist, wobei die Masse des Amino-Gruppen enthaltenden Polymers und das Gesamtvolumen der Poren des porösen Trägermaterials in der selben Weise wie im Anspruch 2 bestimmt werden.

9. Verfahren nach einem der Ansprüche 7 oder 8, worin Schritt (c) bei einer Temperatur im Bereich von 40 bis 80 °C und/oder einem Druck im Bereich von 0,01 bar bis 1 bar durchgeführt wird.

10. Verfahren nach einem der Ansprüche 7 bis 9, worin die Konzentration des Amino-Gruppen enthaltenden Polymers in dem für die Porenfüllmethode verwendeten Lösungsmittel in Schritt (b) im Bereich von 5 g/L bis 200 g/L liegt.

11. Verfahren nach einem der Ansprüche 7 bis 10, worin in einem Schritt (f) ein organischer Rest an das Amino-Gruppen enthaltende Polymer gebunden wird, der die Eigenschaft einer Lewis-Base aufweist.

12. Verwendung eines Sorbens nach einem der Ansprüche 1 bis 6 zur Bindung von Metallen aus Lösungen.

## Claims

1. Sorbent, comprising a porous support material coated with a crosslinked amino group-containing polymer, wherein the concentration of the amino groups of the sorbent determined by titration is at least 600 µmol/mL, based on the total volume of the sorbent, and wherein the amino group-containing polymer is selected from polyvinylamine, polyallylamine and polylysine, wherein the concentration of the amino groups of the sorbent is determined by means of breakthrough measurement with 4-toluenesulphonic acid, as described in the "Analytical methods" section of the description.

2. Sorbent according to claim 1, wherein the ratio of the mass of the amino group-containing polymer to the total volume of the pores of the porous support material is greater than or equal to 0.1 g/mL, wherein the mass of the amino group-containing polymer is determined by the increase in the tamped density compared with the support material according to DIN 53194, and wherein the total volume of the pores of the porous support material is determined by the solvent absorption capacity of the porous support material, wherein the solvent absorption capacity, reported in the unit g (organic solvent)/ mL (dry sorbent), is measured by thoroughly wetting an exactly weighed quantity of dry sorbent with an organic solvent such as for example dimethylformamide and removing excess solvent from the inter-particle volume by centrifugation, determining the mass of the retained solvent by weighing and converting it into the volume via the density of the organic solvent.

3. Sorbent according to claim 1 or 2, wherein the pore volume of the porous support material lies in the range from 30 to 90 vol.-%, based on the total volume of the porous support material, wherein the pore volume is determined in the same way as the total volume of the pores of the porous support material in claim 2.

4. Sorbent according to one of claims 1 to 3, wherein the porous support material has an average pore size in the range from 6 nm to 400 nm, wherein the average pore size of the porous support material is determined by the pore filling method with mercury according to DIN 66133.

5. Sorbent according to one of claims 1 to 4, wherein the porous support material comprises an organic polymer, an inorganic material or a composite material of organic polymer and inorganic material.

6. Sorbent according to one of claims 1 to 5, wherein the amino group-containing polymer is present not covalently linked with the porous support material.

7. Process for the production of a sorbent according to one of claims 1 to 6, which comprises the following steps:
(a) provision of a porous support material;
(b) application of an amino group-containing polymer onto the porous support material by a pore filling method, wherein the amino group-containing polymer is selected from polyvinylamine, polyallylamine and polylysine;
(c) removal of the solvent used in the pore filling method;
(d) repetition of steps (b) and (c); and
(e) crosslinking of the amino group-containing polymer,
wherein the steps (b) and (c) are repeated before the step (e) sufficiently often that the concentration of the amino groups of the sorbent determined after step (e) by titration is at least 600 µmol/mL, based on the total volume of the sorbent, wherein the concentration of the amino groups of the sorbent is determined by means of breakthrough measurement with 4-toluenesulphonic acid, as described in the "Analytical methods" section of the description.

8. Process according to claim 7, wherein the ratio of the mass of the amino group-containing polymer to the total volume of the pores of the porous support material after step (d) is greater than or equal to 0.1 g/mL, wherein the mass of the amino group-containing polymer and the total volume of the pores of the porous support material are determined in the same way as in claim 2.

9. Process according to one of claims 7 or 8, wherein step (c) is performed at a temperature in the range from 40 to 80°C and/or a pressure in the range from 0.01 bar to 1 bar.

10. Process according to one of claims 7 to 9, wherein the concentration of the amino group-containing polymer in the solvent used for the pore filling method in step (b) lies in the range from 5 g/L to 200 g/L.

11. Process according to one of claims 7 to 10, wherein in a step (f) an organic residue which has the nature of a Lewis base is bound onto the amino group-containing polymer.

12. Use of a sorbent according to one of claims 1 to 6 for binding metals from solutions.

## Revendications

1. Agent de sorption, comprenant un matériau support poreux revêtu d'un polymère réticulé contenant des groupes amine, dans lequel la concentration, déterminée par titrage, en groupes amine de l'agent de sorption est d'au moins 600 µmol/ml, par rapport au volume total de l'agent de sorption et le polymère contenant des groupes amine étant choisi parmi la polyvinylamine, la polyallylamine et la polylysine, la concentration en groupes amine de l'agent de sorption étant déterminée au moyen d'une mesure de la restitution avec de l'acide toluènesulfonique-4 tel que décrit dans la partie « méthodes analytiques » de la description.

2. Agent de sorption selon la revendication 1, dans lequel le rapport entre la masse du polymère contenant des groupes amine et le volume total des pores du matériau support poreux est supérieur ou égal à 0,1 g/ml, la masse du polymère contenant des groupes amine étant déterminée par l'augmentation de la densité du produit tassé par rapport au matériau support selon DIN 53194, et le volume total des pores du matériau support poreux étant déterminé par la capacité d'absorption de solvant du matériau support poreux, la capacité d'absorption de solvant, indiquée en g (solvant organique)/ ml (agent de sorption sec), étant mesurée en imprégnant une quantité pesée avec précision d'agent de sorption sec avec un solvant organique tel que par exemple du diméthylformamide et en éliminant le solvant excédentaire du volume interstitiel par centrifugation, en déterminant la masse du solvant retenu par pesage et en la convertissant en volume par la densité du solvant organique.

3. Agent de sorption selon la revendication 1 ou 2, dans lequel le volume de pores du matériau support poreux est compris entre 30 et 90 %vol, par rapport au volume total du matériau support poreux, le volume de pores étant déterminé de la même manière que le volume total des pores du matériau support poreux dans la revendication 2.

4. Agent de sorption selon l'une des revendications 1 à 3, dans lequel le matériau support poreux présente une taille de pore moyenne comprise entre 6 nm et 400 nm, la taille de pore moyenne du matériau support poreux étant déterminée par le procédé de remplissage des pores avec du mercure selon DIN 66133.

5. Agent de sorption selon l'une des revendications 1 à 4, dans lequel le matériau support poreux comprend un polymère organique, un matériau inorganique ou un matériau composite constitué de polymère organique et de matériau inorganique.

6. Agent de sorption selon l'une des revendications 1 à 5, dans lequel le polymère contenant des groupes amine n'est pas lié de manière covalente au matériau support poreux.

7. Procédé de fabrication d'un agent de sorption selon l'une des revendications 1 à 6, qui comprend les étapes suivantes :
(a) préparation d'un matériau support poreux ;
(b) application d'un polymère contenant des groupes amine sur le matériau support poreux par une méthode de remplissage des pores, le polymère contenant des groupes amine étant choisi parmi la polyvinylamine, la polyallylamine et la polylysine ;
(c) élimination du solvant utilisé pour la méthode de remplissage des pores ;
(d) répétition des étapes (b) et (c) ; et
(e) réticulation du polymère contenant des groupes amine,
dans lequel les étapes (b) et (c) sont répétées avant l'étape (e) jusqu'à ce que la concentration, déterminée par titrage après l'étape (e), en groupes amine de l'agent de sorption soit d'au moins 600 µmol/ml, par rapport au volume total de l'agent de sorption, la concentration en groupes amine de l'agent de sorption étant déterminée au moyen d'une mesure de la restitution avec de l'acide toluènesulfonique-4 tel que décrit dans la partie « méthodes analytiques » de la description.

8. Procédé selon la revendication 7, dans lequel le rapport entre la masse du polymère contenant des groupes amine et le volume total des pores du matériau support poreux après l'étape (d) est supérieur ou égal à 0,1 g/ml, la masse du polymère contenant des groupes amine et le volume total des pores du matériau support poreux étant déterminés de la même manière que dans la revendication 2.

9. Procédé selon l'une des revendications 7 ou 8, dans lequel l'étape (c) est effectuée à une température comprise entre 40 et 80 °C et/ou à une pression comprise entre 0,01 bar et 1 bar.

10. Procédé selon l'une des revendications 7 à 9, dans lequel la concentration en polymère contenant des groupes amine dans le solvant utilisé pour la méthode de remplissage des pores dans l'étape (b) est comprise entre 5 g/l et 200 g/l.

11. Procédé selon l'une des revendications 7 à 10, dans lequel, dans une étape (f), un reste organique, qui présente la nature d'une base de Lewis, est lié au polymère contenant des groupes amine.

12. Utilisation d'un agent de sorption selon l'une des revendications 1 à 6 pour la liaison de métaux à partir de solutions.
